# EUROPEAN PATENT SPECIFICATION

(11) **EP 0 562 688 B1**
(45) Date of publication and mention of the grant of the patent: **18.09.1996**
(21) Application number: 93200830.3
(22) Date of filing: 22.03.1993
(51) Int. Cl.: B65G 65/23, B65G 7/08, B65G 65/00

(54) **Device for unloading a container for parcel goods, more particularly for postal parcels**
Vorrichtung zur Entleerung eines Behälters für stückiges Gut, insbesondere für Postpakete
Dispositif pour le vidage d'un conteneur pour marchandise en pièces, en particulier pour colis postaux

(30) Priority: 26.03.1992 NL 9200565
(43) Date of publication of application: 29.09.1993
(73) Proprietor: Koninklijke PTT Nederland N.V., NL-2509 CH The Hague (NL)
(72) Inventor: Prins, Geert Jan, NL-2625 GP Delft (NL); Van der Zon, Gerardus Petrus Antonius Paulus, NL-2403 HC Alphen aan den Rijn (NL)

(56) References cited:
- DE-A- 3 021 367
- DE-A- 3 321 617
- NL-A- 8 301 397

## Description

### A. Background of the invention

### 1. Field of the invention

The invention lies in the field of the transportation and the handling of parcel goods. It relates to a device for unloading a container for parcel goods, more particularly for postal parcels.

### 2. State of the art

For the transportation and handling of postal parcels use is generally made of more or less cage-shaped containers travelling on wheels, also called roll containers, with an open front side through which the containers can be loaded and unloaded. In order to be able to process individually the parcel goods which form the contents of loaded containers, which processing can involve sorting and distribution of the parcel goods, it is customary to tilt such containers in special tilting devices from a set-up position, in which the container is wheeled in, to an unloading position, in which the open front side of the container lies at least partially above a discharging conveyor belt onto which the contents can be unloaded.

Two problems generally occur during unloading. First of all, there is the problem that during unloading undesirable falling heights can arise, with an increased chance of damage. The second problem is that of the load of parcel goods sticking in the container. Sticking occurs due to, for example, so-called arching. This means that parcel goods become jammed between the side walls of the container, with the result that the unloading of at least a part of the parcel goods comes to a standstill, or is even blocked. This can mean that either a container is not completely unloaded, or the parcel goods which have become jammed eventually become dislodged after some time and fall down, with a greatly increased risk of damage. In particular, if the parcel goods are postal parcels, which are generally block-shaped and are stacked at great density in the container, the chance of arching during unloading is great. Another form of sticking can occur in the case of containers with open-work walls, formed by, for example, barred or latticed framing, in which parcel goods can become stuck. In order to prevent premature unloading, the front side is usually kept shut by means of a shut-off wall during the tilting.

A tilting device in which this shut-off wall is designed as a simultaneously tilting conveyor belt which in the unloading position acts as the discharging conveyor belt is known in practice. This known solution partially solves the problem of the falling height, but not the problem of goods sticking.

In another tilting device, known from reference [1], and more particularly intended for unloading containers with mail bags, the shut-off wall is formed by one or two unloading flaps, which in the unloading position are opened, above a simultaneously tilting conveyor belt. The unloading flaps are rotatable about parallel axes in the plane of the shut-off wall. The simultaneously tilting conveyor belt is situated at a distance just outside the turning circle of each of the unloading flaps. Although a greater falling height to the discharging conveyor can occur here, with controlled opening of the unloading flaps the contents of the container can to some extent slide in the direction of the discharging conveyor, with the result that the effect of the greater falling height is limited. Where only one unloading flap is used, this sliding effect could be increased, but the radius of the turning circle, and consequently the possible falling height to the discharging conveyor belt, is twice as great. Besides, this known solution also does not solve the problem of goods sticking. The chance of arching is even increased, due to the fact that when the unloading flaps are open, the unloading opening is narrower than the open front side of the container used.

In yet another tilting, unloading device, known from reference [3], and more particularly intended for unloading containers with "brush bodies", the shut-off wall is formed by a cover, rotatable in the unloading position, or by a cover slidable to partially open up the container. However, this known device is for unloading relatively light and small items. Therefore, it is possible to place the container in the set-up space with its open side at the top and to tilt it to an unloading position with the open side in an almost vertical position, the goods to be unloaded sliding along one of the side walls of the container. Such a procedure would, if used in the case of postal parcels in the usual cage-shaped containers, lead to an uncontrollable and probably only partial unloading, resulting in an increased chance of damage and the need for extra measures to ensure complete unloading.

### B. Summary of the invention

According to a first aspect of the invention, the object is to provide a device for unloading containers containing parcel goods, more particularly postal parcels, which limits the chance of damage during the unloading. A device for unloading a container for parcel goods, more particularly for postal parcels, comprising:
- a frame provided with a set-up space for a container and an unloading door which is suspended so that it can swing in the frame, and against which a container to be unloaded, and having an open front side, can be placed in the set-up space, and
- a discharging conveyor,
   which frame can be tilted about an essentially horizontal axis between a set-up position, in which the container can be placed in the set-up space and removed from it again, and an unloading position, in which the unloading door can swing open and the container can be unloaded above the discharging conveyor, is to this end characterised in that the unloading door can swing in the frame, by means of swing devices, about a swing axis which lies outside the plane of the unloading door.

According to a second aspect of the invention, the object is to provide a device for unloading containers equipped with a rotatable side wall and containing parcel goods, more particularly postal parcels, which not only limits the risk of damage during unloading, but also virtually completely eliminates the chance of sticking. A device for unloading a container for parcel goods, more particularly for postal parcels, which container is provided with a side wall which, for the purpose of increasing the area of the open front side of the container, is rotatable about an axis of rotation in or near the plane of the side wall, and having the characteristics mentioned in the previous paragraph, for this purpose according to the invention is further characterised in that the unloading door is provided with coupling means for coupling to the rotatable side wall and for taking along the rotating side wall in the coupled state while it is being swung open.

The invention is based on the idea that the position of the swing axis of the unloading door can be selected in such a way that the parcel goods to be unloaded, when they are at a suitable height above the discharging conveyor, can be, as it were, laid down on the conveyor belt by the opening door, preferably interacting with a suitably disposed guide wall. If, in addition, a container with rotatable side wall which is known per se, for example from reference [2] is used, the open front side and the space between the side walls of the container can be enlarged in a simple way during unloading by adding a simple carrier coupling between the unloading door and said rotatable side wall, with the result that the chance of arching almost entirely disappears.

### C. References

[1] NL-A-8301397, entitled: Inrichting voor het lossen van een houder voor stukgoederen, meer in het bijzonder voor postzakken (Device for unloading a container for parcel goods, more particularly for mail bags);
[2] NL-C-145504, entitled: Handwagen voor het vervoeren van goederen, zoals postzakken, pakketten en dergelijke (Trolley for transporting goods such as mail bags, parcels and the like).
[3] DE-A-3321617, entitled: Vorrichtung zum Zuführen von Bürstenkörpern

### D. Brief description of the drawing

The invention will be explained in greater detail by means of a description of an example of an embodiment with reference to a drawing, in which:
Fig. 1 is a side view of a device according to the invention, in the set-up position, with a container wheeled in;
Fig. 2 is a top view of the device in the set-up position, with a container wheeled in;
Fig. 3 is a side view of the device in the unloading position, with open unloading door;
Fig. 4 is a front view of the device, also in the unloading position, showing two extreme positions of the unloading door, viewed in a direction indicated in Fig. 3.

### E. Description of an example of an embodiment

The device according to the invention is used for unloading containers with an open front side. Although the invention is not limited thereto, it will be assumed in the description that the containers are mobile. Such containers are also known as roll containers. The unloading takes place by tilting a roll container from a set-up position with the open front side forward until it is in an unloading position above a discharging conveyor belt. During this tilting, the open side is kept closed until the unloading position is reached. The tilting generally takes place about a horizontal tilting axis. This tilting axis can be selected essentially parallel to the discharge direction of the conveyor belt, which means that the roll container is tilted from a set-up position next to the conveyor belt. The tilting can also take place about a tilting axis essentially at right angles to the discharge direction from a set-up position in line with the conveyor belt. The second option is selected in the example of an embodiment.

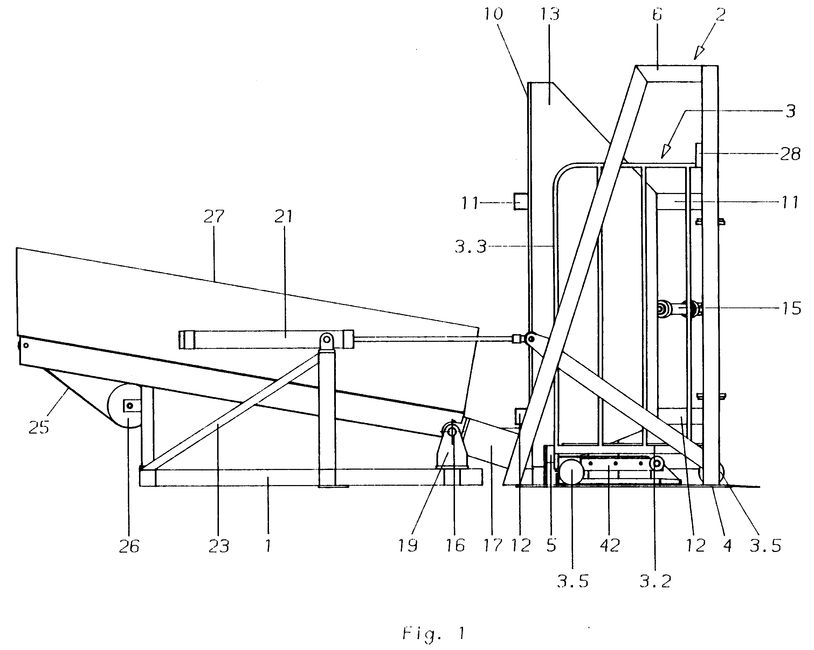

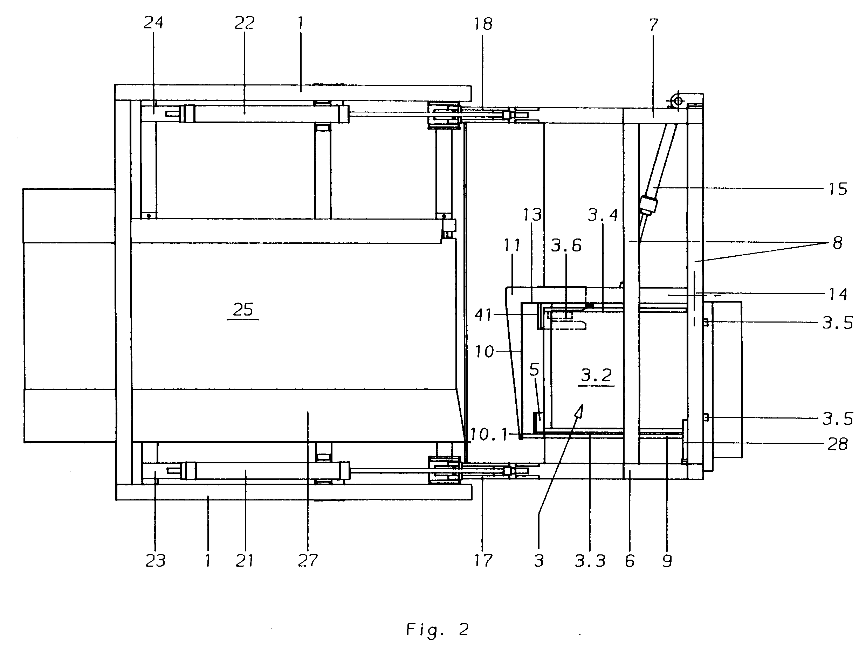

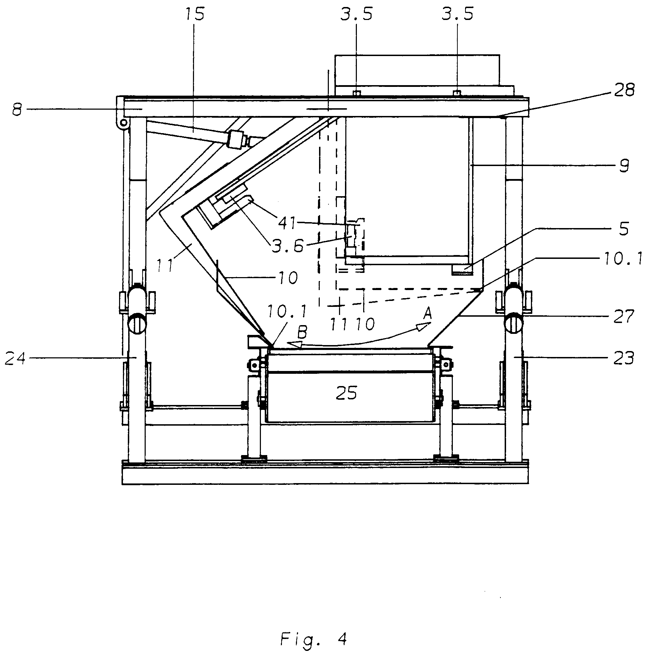

In an example of an embodiment, the device according to the invention comprises a surrounding frame 1, which forms the static environment for a tilting set-up frame 2 for a roll container 3, as shown in the drawing. First of all, the device is described with reference to Fig. 1 in side view and Fig. 2 in top view, with a roll container 3 in the set-up position. The known roll container used in the example of an embodiment has a vertical rear wall 3.1, a flap-up bottom 3.2, two side walls 3.3 and 3.4, and three wheels 3.5, and also a wheel 3.6. Side wall 3.4 is rotatable about a vertical axis near the rear wall 3.1 when the bottom 3.2 has been/is being lifted. Wheel 3.6 (see Fig. 4), near the open front side, is fitted on the bottom of the rotatable side wall 3.4.

The set-up frame 2 is formed by two parallel frameworks 6 and 7, rigidly connected to each other by means of transverse connections 8 along the top and bottom. Approximately half of the the space between the frameworks 6 and 7 is taken up by a set-up space for setting up a roll container 3. The set-up space is bounded at the bottom by a floor plate 4, at one vertical side by a side wall 9 which is fixed relative to the floor plate 4, at the front by an unloading door 10, which is swivellably suspended in the set-up frame 2 about halfway between the frameworks 6 and 7, by means of L-shaped swing arms 11 and 12, and at the other vertical side by a side wall 13 which is fixed on the swing arms 11 and 12 and connects to the unloading door 10. A roll container to be unloaded is wheeled in through the open rear side of the set-up space, with its open front side in the direction of the unloading door 10, onto the floor plate 4 up to a threshold-type stop 5. In the set-up space, just above the floor plate 4, there is a fork 41 which is fixed to the bottom side of the side wall 13, and which grips around the wheel 3.6 when a roll container is wheeled in. A push-up mechanism 42, for example hydraulically driven, is fitted on the floor plate 4, by which mechanism the bottom 3.2 of a roll container 3 set up in the set-up space can be lifted, or at any rate pushed up so far that the side wall 3.4 becomes rotatable. The unloading door 10 can swing about a swing axis 14; this swing axis is situated essentially vertical to the floor plate 4, in the plane of the open rear side of the set-up space and near the place where the axis of rotation of the rotatable side wall 3.4 of a roll container 3 to be unloaded is situated. A hydraulic cylinder coupling 15 between framework 7, and a connecting piece (not shown) between the swing arms 11 and 12 forms the drive mechanism for the swing movement of the door, for which the other half of the space between the frameworks 6 and 7 is used.

The set-up frame 2 can tilt about a horizontal tilting axis 16 formed by the points of rotation of rotating connections between attachments 17 and 18 fixed on the frameworks 6 and 7 and corresponding elevations 19 and 20 of the surrounding frame 1. The drive mechanism for the tilting movement of the set-up frame about the tilting axis 16 consists of a pair of hydraulic cylinder couplings 21 and 22 fitted at some distance above and at right angles to the tilting axis 16 between upright frame parts 23 and 24 of the surrounding frame 1 and the frameworks 6 and 7. Leading away from the set-up space with the closed unloading door 10, but slightly staggered, a conveyor belt 25 extends from the tilting axis 16, which conveyor belt can be driven by means of a drum motor 26, and is a width which corresponds to the width of the unloading door 10 shutting off the open front side of the roll container 3. A guide wall 27 is fitted along the side of the conveyor belt 25, which corresponds to the fixed side wall 9 of the set-up space.

Before tilting, the roll container 3 is locked in the set-up space by means of clamping means on the rear wall of the roll container 3. Simple clamping screws or even hydraulically driven claw-type devices which grip from the set-up frame 2, for example on the side of the rear wall, can be selected for this. A supporting pin 28 is also provided on framework 6, at a height directly above the side wall 3.3 of the roll container, by means of which pin the roll container 3 is prevented from shooting off forward during the tilting, should the clamping on the rear wall 3.1 prove inadequate.

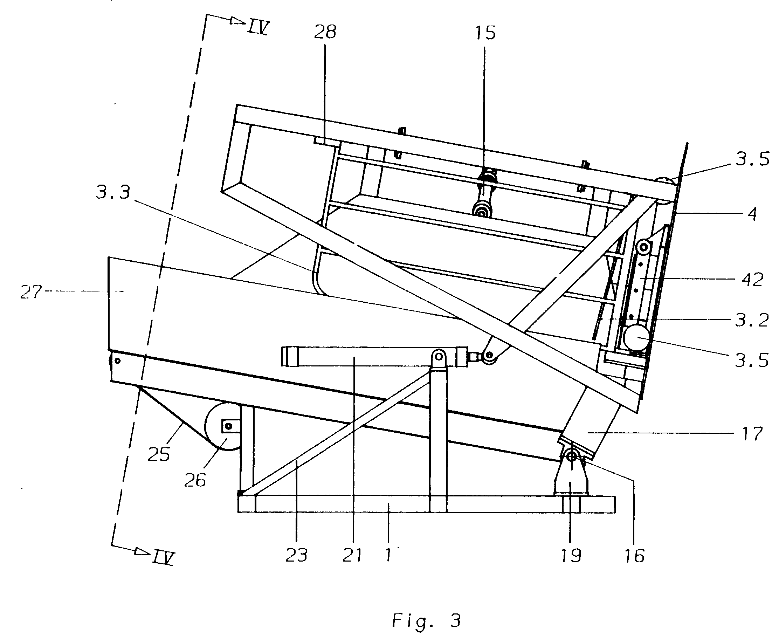

The tilting movement is initiated by activation of the drive mechanism formed by the hydraulic couplings 21 and 22. In the course of it, the set-up frame 2 is pulled forward and lifted up slightly until it is in a position above the conveyor belt 25, while the plane of the still closed door 10 is approximately parallel to the conveying plane of the conveyor belt 25. This is the unloading position. The device is shown in this position in a side view in Fig. 3 and in a front view in Fig. 4. During the tilting movement the push-up mechanism 42 on the floor plate 4, by which the bottom 3.2 of the roll container 3 is lifted, is also activated, as a result of which the side wall 3.4 becomes rotatable. The swing movement of the unloading door is then initiated by activation of the drive mechanism formed by the hydraulic coupling 15. The position of the swing axis and the dimensions of the unloading door are selected in such a way that when the unloading door 10 is swung from the closed position to the open end position (indicated in Fig. 4 by the double arrow A ↔ B) the outer edge 10.1 of the unloading door 10 swings/moves just along the guide wall 27 and along the conveying face of the conveyor belt 25. Parcel goods to be unloaded, which in the unloaded state are generally already resting against the inside of the unloading door 10, are consequently, as it were, spread down or laid down on the surfaces of the guide wall 13 and the conveyor belt 25 lying below. In the swing movement of the unloading door 10 the wheel 3.6 is also pulled along by the fork 41, and the rotating side wall 3.4 of the roll container is thus carried along, with the result that the open front side of the roll container 3 widens, and the space between the side walls 3.3 and 3.4 widens out. In this way parcel goods are prevented as far as possible from remaining behind in the roll container during the unloading, for example through arching.

The open end position of the unloading door 10 is preferably such that the inside of the unloading door in that position forms a guide wall corresponding to the guide wall 27 at the opposite side of the conveyor belt 25.

The discharging conveyor belt is selected so that it slants slightly, on account of the handling height lying behind it. It also has a slight advantage in terms of energy in that a roll container has to be lifted slightly less high and tilted slightly less far.

The height of the unloading door 10 and the side wall connecting thereto is preferably greater than the height of the roll container, in order to catch any parcel goods which might roll over the top during the tilting movement.

## Claims

1. Device for unloading a container for parcel goods, more particularly for postal parcels, comprising:
- a frame (2) provided with a set-up space for a container (3) and an unloading door (10) which is suspended so that it can swing in the frame (2), and against which a container to be unloaded, and having an open front side, can be placed in the set-up space, and
- a discharging conveyor (25),
which frame (2) is tiltable about an essentially horizontal axis (16) between a set-up position, in which the container (3) can be placed in the set-up space and removed from it again, and an unloading position, in which the unloading door (10) can swing open and the container (3) can be unloaded above the discharging conveyor (25), **characterised in that** the unloading door (10) can swing in the frame (2), by means of swing devices (15), about a swing axis (14) which lies outside the plane of the unloading door (10).

2. Device according to Claim 1, **characterised in that** in the unloading position the swing axis (14) lies essentially parallel to the discharging face of the conveyor belt (25).

3. Device according to Claim 1 or 2, **characterised in that** the device also comprises a first guide wall (27) which is fixed relative to the conveyor (25), for guiding parcel goods unloaded from the container (3) in the direction of the conveyor (25), which guide wall (27) is placed essentially at a tangent to the turning circle of the unloading door (10).

4. Device according to Claim 3, **characterised in that** the unloading door (10) swinging open into the unloading position has an end position in which the unloading door forms a second guide wall opposite the fixed guide wall (27) at the other side of the conveyor (25).

5. Device according to Claim 1, 2, 3 or 4, **characterised in that** the frame is provided with locking means for locking a container in the set-up space, which locking means engage on the container essentially on or near a rear wall opposite the open front side of a container which has been placed in the set-up space.

6. Device according to Claim 1, more particularly for unloading a container (3) provided with a side wall (3.4), which side wall in order to increase the area of the open front side of the container is rotatable about an axis of rotation in or near the plane of the side wall, **characterised in that** the swing axis (14) is essentially parallel to the axis of rotation, and in that the unloading door (10) is provided with coupling means (41) for coupling to the rotatable side wall (3.4) and for taking along the rotating side wall in the coupled state while it is being swung open.

7. Device according to Claim 6, **characterised in that** the device also has a first guide wall (27) which is set up fixed relative to the conveyor (25), for guiding parcel goods unloaded from the container (3) in the direction of the conveyor, which guide wall (27) is placed essentially at a tangent to the turning circle of the unloading door (10).

8. Device according to Claim 7, **characterised in that** the unloading door (10) swinging open into the unloading position has an end position in which the unloading door forms a second guide wall opposite the fixed guide wall (27) at the other side of the conveyor (25).

9. Device according to Claim 6, 7 or 8, **characterised in that** the frame is provided with locking means for locking a container in the set-up space, which locking means engage upon the container essentially on or near a rear wall opposite the open front side of a container which has been placed in the set-up space.

## Patentansprüche

1. Vorrichtung zum Entladen eines Containers für Paketgüter, insbesondere für Postpakete, umfassend:
- ein Gestell (2), das einen Einstellraum für einen Container (3) und ein Entladetor (10) aufweist, das derart aufgehängt ist, dass es im Gestell (2) gedreht werden kann, und gegen das ein zu entladender Container, der eine offene Frontseite aufweist, im Einstellraum plaziert werden kann, und
- ein Entladeförderer (25),
wobei das Gestell (2) um eine im wesentlichen horizontale Achse (16) zwischen einer Einstellposition, in welcher der Container (3) im Einstellraum plaziert und wieder daraus entfernt werden kann, und einer Entladeposition gedreht werden kann, in welcher das Entladetor (10) offengeschwenkt und der Container (3) über dem Entladeförderer (25) entladen werden kann, **dadurch gekennzeichnet, dass** das Entladetor (10) im Gestell (2) mittels Schwenkvorrichtungen (15) um eine Schwenkachse (14) geschwenkt werden kann, die sich ausserhalb der Ebene des Entladetors (10) befindet.

2. Vorrichtung nach Anspruch 1, **dadurch gekennzeichnet, dass** die Schwenkachse (14) in der Entladeposition im wesentlichen parallel zur Entladeseite des Förderbandes (25) liegt.

3. Vorrichtung nach Anspruch 1 oder 2, **dadurch gekennzeichnet, dass** die Vorrichtung auch eine erste Führungswand (27) umfasst, die relativ zum Förderer (25) fixiert ist, um aus dem Container (3) entladene Paketgüter in der Richtung des Förderers (25) zu führen, wobei diese Führungswand (27) im wesentlichen in einer Tangente zum Drehkreis des Entladetors (10) angeordnet ist.

4. Vorrichtung nach Anspruch 3, **dadurch gekennzeichnet, dass** das in die offene Entladeposition gedrehte Entladetor (10) eine Endposition aufweist, in der das Entladetor gegenüber der fixierten Führungswand (27) auf der anderen Seite des Förderers (25) eine zweite Führungswand bildet.

5. Vorrichtung nach einem der Ansprüche 1, 2, 3 oder 4, **dadurch gekennzeichnet, dass** das Gestell mit Sperrmitteln versehen ist, um einen Container im Einstellraum zu sperren, wobei diese Sperrmittel in den Container eingreifen im wesentlichen an oder nahe einer Rückwand gegenüber der offenen Frontseite eines im Einstellraum plazierten Containers.

6. Vorrichtung nach Anspruch 1, insbesondere zum Entladen eines Containers (3), der eine Seitenwand (3.4) aufweist, wobei diese Seitenwand, um die Fläche der offenen Frontseite des Containers zu vergrössern, in oder nahe der Ebene der Seitenwand um eine Drehachse drehbar ist, **dadurch gekennzeichnet, dass** die Schwenkachse (14) im wesentlichen parallel zur Drehachse liegt, und dass das Entladetor (10) mit Kupplungsmitteln (41) versehen ist, um mit der drehbaren Seitenwand (3.4) gekoppelt zu werden, und um die drehbare Seitenwand im gekoppelten Zustand mitzunehmen, währenddem es offengeschwenkt wird.

7. Vorrichtung nach Anspruch 6, **dadurch gekennzeichnet, dass** die Vorrichtung auch eine erste Führungswand (27) aufweist, die relativ zum Förderer (25) fixiert aufgestellt ist, um vom Container (3) entladene Paketgüter in die Richtung des Förderers zu führen, wobei die Führungswand (27) im wesentlichen in einer Tangente zum Drehkreis des Entladetors (10) angeordnet ist.

8. Vorrichtung nach Anspruch 7, **dadurch gekennzeichnet, dass** das in die Entladeposition offenschwenkende Entladetor (10) eine Endposition aufweist, in der das Entladetor gegenüber der fixierten Führungswand (27) auf der anderen Seite des Förderers (25) eine zweite Führungswand bildet.

9. Vorrichtung nach einem der Ansprüche 6, 7 oder 8, **dadurch gekennzeichnet, dass** das Gestell mit Sperrmitteln versehen ist, um einen Container im Einstellraum zu sperren, wobei diese Sperrmittel in den Container eingreifen im wesentlichen an oder nahe einer Rückwand gegenüber der offenen Frontseite eines im Einstellraum plazierten Containers.

## Revendications

1. Dispositif destiné à décharger un conteneur de marchandises en colis, plus particulièrement de colis postaux, comprenant :
- un châssis (2) présentant un espace d'installation pour recevoir un conteneur (3), et une porte de déchargement (10) qui est suspendue de manière à pouvoir pivoter dans le châssis (2) et contre laquelle un conteneur à décharger, présentant un côté avant ouvert, peut être placé dans l'espace d'installation, et
- un transporteur de déchargement (25),
- lequel châssis (2) peut être basculé autour d'un axe (16) sensiblement horizontal entre une position d'installation, dans laquelle le conteneur (3) peut être placé dans l'espace d'installation et en être évacué, et une position de déchargement, dans laquelle la porte de déchargement (10) peut être ouverte par pivotement et le conteneur peut être déchargé sur le transporteur de déchargement (25), caractérisé en ce que la porte de déchargement (10) peut pivoter dans le châssis (2) sous l'action de dispositifs de pivotement (15), autour d'un axe de pivotement (14) qui se trouve en dehors du plan de la porte de déchargement (10).

2. Dispositif selon la revendication 1, caractérisé en ce que, dans la position de déchargement, l'axe de pivotement (14) est sensiblement parallèle à la face de déchargement de la courroie transporteuse (25).

3. Dispositif selon la revendication 1 ou 2, caractérisé en ce que le dispositif comprend une première paroi de guidage (27) qui est fixe par rapport au transporteur (25) et sert à guider des marchandises en colis déchargées du conteneur (3) en direction du transporteur (25), laquelle paroi de guidage (27) est placée sensiblement selon une tangente au cercle de rotation de la porte de déchargement (10).

4. Dispositif selon la revendication 3, caractérisé en ce que la porte de déchargement (10) qui s'ouvre par pivotement pour prendre la position de déchargement peut prendre une position d'extrémité dans laquelle la porte de déchargement forme une deuxième paroi de guidage qui est à l'opposé de la paroi de guidage fixe (27) de l'autre côté du transporteur (25).

5. Dispositif selon la revendication 1, 2, 3 ou 4, caractérisé en ce que le châssis est équipé de moyens de verrouillage destinés à verrouiller un conteneur dans l'espace d'installation, lesquels moyens de verrouillage attaquent le conteneur sensiblement sur ou à proximité d'une paroi arrière qui est à l'opposé du côté avant ouvert d'un conteneur qui a été placé dans l'espace d'installation.

6. Dispositif selon la revendication 1, plus particulièrement destiné à décharger un conteneur (3) muni d'une paroi latérale (3, 4), laquelle paroi latérale peut tourner autour d'un axe de rotation situé dans le plan de la paroi latérale ou à proximité de ce plan pour agrandir la surface du côté avant ouvert du conteneur, caractérisé en ce que l'axe de pivotement (14) est sensiblement parallèle à l'axe de rotation et en ce que la porte de déchargement (10) est munie de moyens d'accouplement (41) servant à s'accoupler à la paroi latérale tournante (3, 4), et destinée à entraîner la paroi latérale tournante à l'état accouplé pendant son mouvement d'ouverture par pivotement.

7. Dispositif selon la revendication 6, caractérisé en ce que le dispositif possède aussi une première paroi de guidage (27) qui est agencée fixe par rapport au transporteur (25), pour guider les marchandises en colis déchargées du conteneur (3) en direction du transporteur, laquelle paroi de guidage (27) est placée sensiblement selon une tangente au cercle de rotation de la porte de déchargement (10).

8. Dispositif selon la revendication 7, caractérisé en ce que la porte de déchargement (10) qui s'ouvre par pivotement pour prendre la position de déchargement peut prendre une position d'extrémité dans laquelle la porte de déchargement forme une deuxième paroi de guidage qui est à l'opposé de la paroi de guidage fixe (27) de l'autre côté du transporteur (25).

9. Dispositif selon la revendication 6, 7 ou 8, caractérisé en ce que le châssis est équipé de moyens de verrouillage destinés à verrouiller un conteneur dans l'espace d'installation, lesquels moyens de verrouillage attaquent le conteneur sensiblement sur ou à proximité d'une paroi arrière qui est à l'opposé du côté avant ouvert d'un conteneur qui a été placé dans l'espace d'installation.
